# EUROPEAN PATENT SPECIFICATION

(11) **EP 0 822 501 B1**
(45) Date of publication and mention of the grant of the patent: **18.02.2004**
(21) Application number: 97304654.3
(22) Date of filing: 27.06.1997
(51) Int. Cl.: G06F 17/24

(54) **Annotation of on-line documents**
Aufzeichnung von On-Line-Dokumenten
Annotation de documents en ligne

(30) Priority: 01.08.1996 US 693836
(43) Date of publication of application: 04.02.1998
(73) Proprietor: Hewlett-Packard Company, A Delaware Corporation, Palo Alto, CA 94304 (US)
(72) Inventor: Shatrau, Anne C., Albany, OR 97321 (US); Schroeder, Henry J., Jr., Corvallis, OR 97330 (US); Cole, Donald B., Depoe Bay, OR 97341 (US); May, Gregory J., Corvallis, OR 97330 (US); Espeland, James Alan, Corvallis, OR 97330 (US)
(74) Representative: Carpmaels & Ransford

(56) References cited:
- EP-A- 0 612 006
- WO-A-95/20794
- US-A- 5 146 552
- US-A- 5 231 578
- "ON-LINE HIGHLIGHTING AND MARGIN NOTES" IBM TECHNICAL DISCLOSURE BULLETIN,US,IBM CORP. NEW YORK, vol. 34, no. 10A, 1 March 1992 (1992-03-01), pages 481-484, XP000302379 ISSN: 0018-8689
- "TECHNIQUE FOR ANNOTATING A DOCUMENT PAGE" IBM TECHNICAL DISCLOSURE BULLETIN,US,IBM CORP. NEW YORK, vol. 34, no. 10B, 1 March 1992 (1992-03-01), pages 53-54, XP000302574 ISSN: 0018-8689

## Description

### Background

The present invention concerns annotation of documents which are displayed by a computing system.

When reading a traditional book or a manual, a reader may make handwritten notes in the margins. These handwritten notes or annotations may include questions to be answered later, comments on the text, examples of what is discussed, summary information and so on.

For documentation presented on-line, it is generally not practical to use handwritten notes to annotate the text. Therefore other ways must be found to make notes. If maintaining the integrity of the original document is not important, a user may use a keyboard to add notes directly into the text of an on-line document. However, for some applications such as on-line books, on-line documentation, on-line manuals, etc., it is generally not desirable to have the text changed.

Some attempts have been made to allow the annotations of an on-line document without changing the contents of the document. For example, Stephen R. Levin, et al sets out an *Apparatus for Document Annotation and Manipulation using Images from a Window Source* in USPN 5,231,578. In the disclosed system, an annotatable document is generated from a window of a multi-window support program running independently of the annotation program. For each window of the multi-window program, a working document is generated and is annotatable by the annotation program. An annotatable document is also generated from the whole screen view of overlapping windows produced during execution of the multi-window support program. Annotated working documents may be subsequently stored in and thereafter retrieved from the database of the multi-window support program.

Elie Cassoria et al., disclose a *Method for Associating Annotation with Electronically Published Material* in USPN 5,146,552. In their system, annotations are made and stored separately from the originally published document. The association of annotations with a particular context within the document is performed by identifying major document elements such as chapters, sections, sub-sections, paragraphs, figures, and so on. The relative position within the "finest" identified document element is then recorded to fix the precise position of some annotations that the reader wants to pinpoint to a particular line or word position.

EP 0612006A1 discloses a method and system for annotating objects in display screen windows. The annotations are permanently and persistently associated with a title text in a window and are either displayed or hidden along with the window having the associated title text. The method includes the step of displaying an annotation box when a "new note" mode is entered.

WO 95/20794 discloses a note program which implements, in a data processing environment, many of the attributes of paper post-it (RTM) notes.

These prior art systems provide some ability to annotate on-line documents. However, the interfaces are generally cumbersome. Further, the association between annotations and related text is not crisp. It is desirable, therefore, to develop an annotation system with a more elegant interface.

### Summary of the Invention

In accordance with the preferred embodiment of the present invention, as claimed, an annotation interface for use on a computing system is presented. When using the annotated interface, a document is annotated by displaying an annotation box upon a user selecting the annotation feature and a location in the document. After a user has added desired text to the annotation box, the user closes the annotation box. The selected location in the document is then marked.

For example, in one embodiment of the present invention, the annotation feature is indicated upon selection of the annotation feature. When the annotation feature is indicated, the annotation box is displayed upon the user selecting a location in the document. The annotation feature is selected by selecting a software button displayed on a display. Alternately, the selection may be made, for example, by selecting an "annotation" listing on a pull-down menu, by depressing a particular function key on a keyboard, by depressing a particular sequence of keys on a keyboard, or by some other means.

The annotation feature is indicated, for example, by changing a shape of a cursor. For example, the shape of the cursor may be changed into the shape of a paper clip, a pencil, a scrap of paper, or any other shape which is different from the original shape of the cursor. Alternately, the cursor may be changed by shading the cursor or placing a drop shadow over the cursor. The annotation feature may also be indicated in different ways, for example, by displaying a predetermined image on the computer display or making a particular sound by the computing system.

In the preferred embodiment, the user selects the location in the document, for example, by placing the cursor over the location in the document and making a selection using an input device. Also in the preferred embodiment, the annotation box is an annotate dialog box.

The location is marked, for example, by displaying a special icon in a location in a vicinity of the location in the document. For example, the location is marked in a margin of the document.

Upon a user selecting the special icon, the annotation box is displayed. The text of the annotation may then be read, modified and/or deleted by a user.

The location of the special icon may be moved within the document. For example, a user may move the special icon by dragging and dropping the special icon to a new location. Alternately, the user may move the special icon by cutting/copying and pasting the special icon to a new location.

In an alternate embodiment of the present invention, the annotation of a document is performed by first selecting a location in the document for the annotation. A marker is shown in the document at the selected location. Upon the user selecting the annotation feature, the annotation box is displayed. After a user has added desired text to the annotation box, the user closes the annotation box. The selected location in the document is then marked.

The present invention provides an efficient, intuitive and easy to use interface for annotating a document.

### Brief Description of the Drawings

Figure 1 shows an on-line book displayed on the display of a computing system in accordance with a preferred embodiment of the present invention.
Figure 2 is a flowchart which describes operation of an interface for annotating a document in accordance with a preferred embodiment of the present invention.
Figure 3, Figure 4, Figure 5, Figure 6, Figure 7, Figure 8 and Figure 9 show computer displays which illustrate interaction with an on-line book on a computer screen in order to place and manipulate annotations in accordance with a preferred embodiment of the present invention.
Figure 10 is a flowchart which describes operation of an interface for annotating of text within a document in accordance with an alternate preferred embodiment of the present invention..
Figure 11 and Figure 12 show computer displays which illustrate interaction with an on-line book on a computer screen in order to place and manipulate annotations in accordance with the alternate preferred embodiment of the present invention.

### Description of the Preferred Embodiment

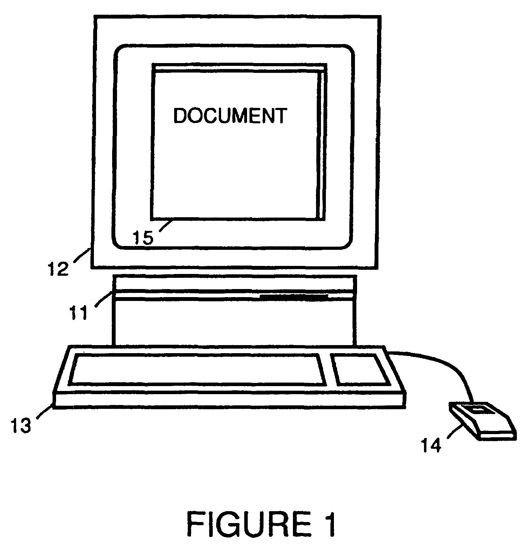

Figure 1 shows a computing system 11 in accordance with a preferred embodiment of the present invention. The computing system includes various input devices such as a keyboard 13 and a mouse 14. Other pointing devices may be utilized instead of mouse 14. For example, mouse 14 may be replaced or supplemented by a trackball input device, an isopoint input device, a trackpad input device, cursor keys or some other input device either separate from or incorporated as part of keyboard 13.

Within a computer display 12, a portion of a document 15 is shown. Document 15 contains, for example, text and/or graphics. Document 15 is for example, an on-line book, on-line documentation, an on-line manual, a text file, a graphics file or any document which contains any combination of text and/or graphics.

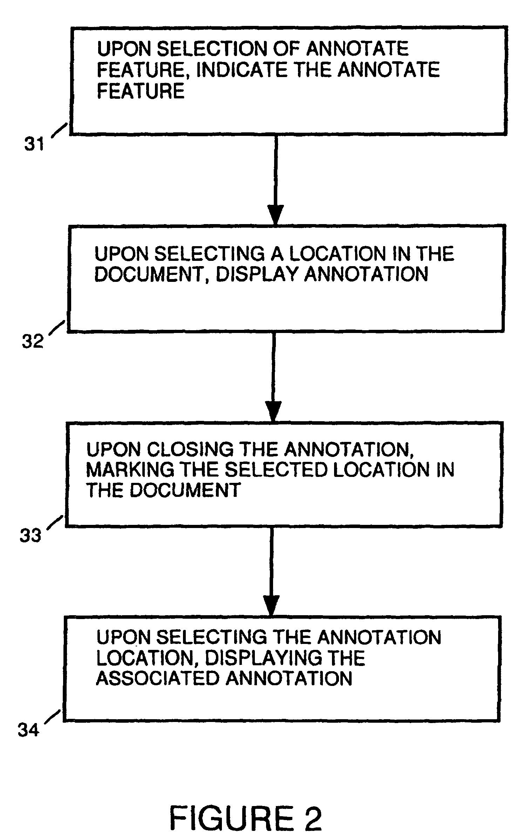

Figure 2 is a flowchart which describes operation of an interface for annotating document 15 in accordance with a preferred embodiment of the present invention. In a step 31, upon selection by a user of the annotation feature, the interface indicates the analog feature has been selected. The selection may be performed, for example, by selecting a special "annotation" button. Alternately, the selection may be made, for example, by selecting an "annotation" listing on a pull-down menu, by depressing a particular function key on a keyboard, by depressing a particular sequence of keys on a keyboard, or by some other means.

The annotate feature may be indicated, for example, by displaying a predetermined image on the computer display or making a particular sound by the computing system. For example, in the preferred embodiment of the present invention, the cursor is changed to indicate the annotation feature. The cursor may be changed, for example, by shading the cursor or placing a drop shadow from the cursor. Alternately, the shape of the cursor may be changed. For example, the cursor may be changed into the shape of a paper clip, a pencil, a scrap of paper, or any other shape which is different from the original shape of the cursor.

In a step 32, upon a location in the text being selected, an annotation is displayed. For example, the location is selected by placing the cursor over the location and depressing or releasing a key on an input device such as a mouse, trackball, trackpad or keyboard. The annotation is displayed, for example, within an annotate dialog box. Initially, a displayed annotation does not have any user-defined text. The user may add the desired text for the annotation, for example, using a keyboard or another input device.

Instead of, or in addition to, adding plain text to the annotation box, other information may be attached to the analog box. For example, graphics information may be attached to the annotation box. The graphic information includes, for example, a drawing, map, photo or snapshot. In addition to graphics, other types of media can be attached to the annotation box. The media includes, for example, a sound file, a movie file.

In a step 33, upon closing the annotation dialog box, the selected location is marked, for example by displaying a special icon in the vicinity of the selected location. For example, the special icon is placed in the margin by the selected location.

In a step 34, upon a user selecting the annotation, the associated annotation dialog box is displayed. For example, the annotation is selected by selecting the special icon. Once the annotation has been selected, the user may then read the annotation, modify the annotation, delete the annotation, and so on.

Additionally, the user may move the location of the annotation, for example by changing the location of the special icon. For example, the special icon is cut/copied and pasted to a new location. Alternately, the special icon is moved by a "drag-and-drop" technique, or by some other method.

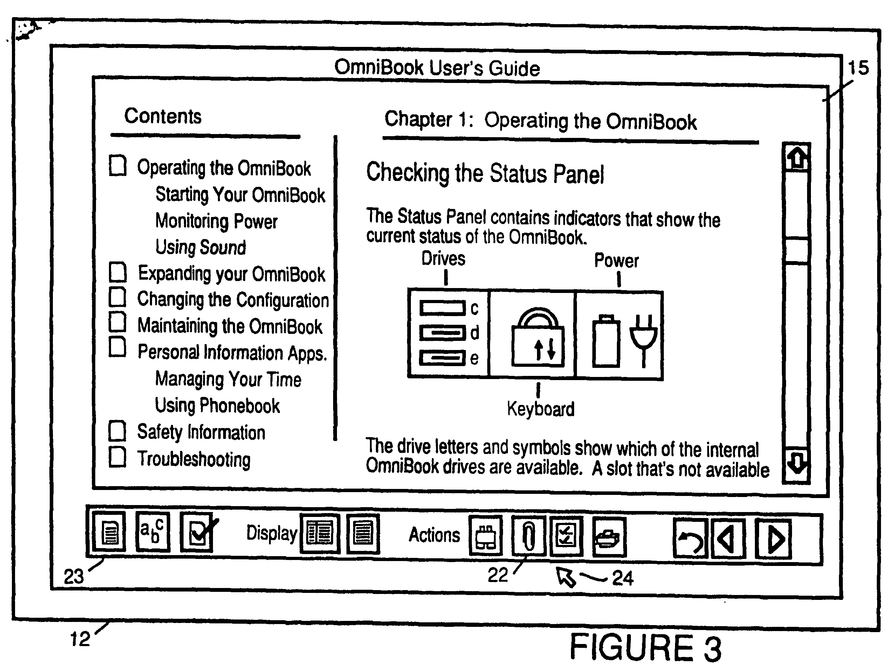

Figures 3, 4, 5, 6, 7, 8 and 9 show various screens of computer display 12 which illustrate interaction with a document 15 in order to place and manipulate annotations in accordance with a preferred embodiment of the present invention. The computer screen shown in Figure 3 includes in addition to document 15, various interface buttons on a toolbar 23, including an annotate button 22. Document 15 may be, for example, an on-line book, on-line documentation, an on-line manual, a text file, a graphics file or any document which contains any combination of text and/or graphics.

A cursor 24 is under control of an input device such as mouse 14 or a trackball input device, an isopoint input device, a trackpad input device, cursor keys or some other input device either separate from or incorporated as part of keyboard 13. In order to annotate a location in document 15, cursor 24 may be used to select annotate button 22. Alternately, in order to annotate a location, another action may be taken, for example, by selecting an "annotation" listing on a pull-down menu, depressing a particular function key on a keyboard, depressing a particular sequence of keys on a keyboard, or some other pre-defined action

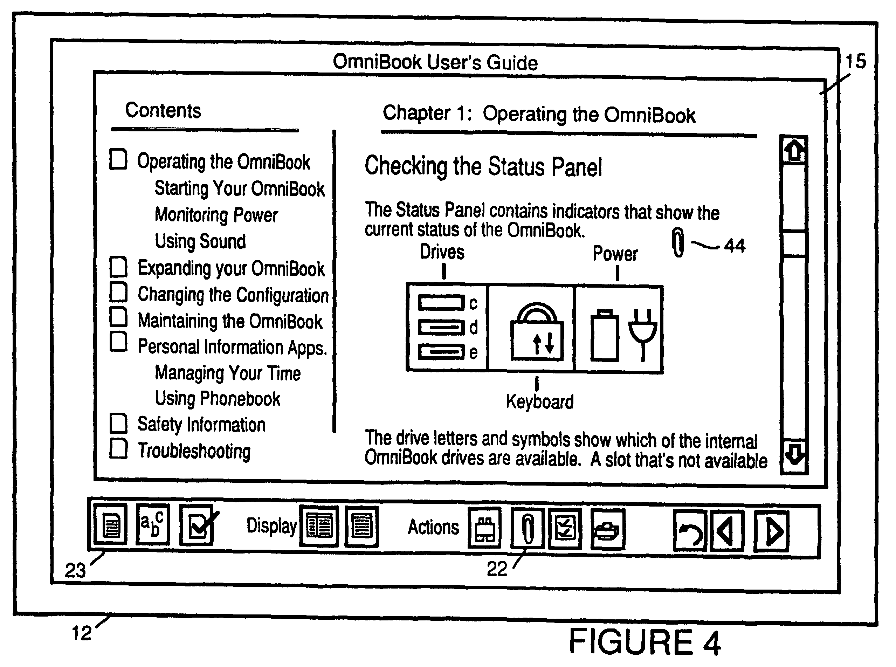

Upon selection of annotate button 24, the annotation feature is indicated. For example, Figure 4 shows that cursor 24 has been replaced by a special paper clip shaped cursor 44. As discussed above, there other ways selection of the annotation feature may be indicated.

In the preferred embodiment the shape of the cursor is defined using standard library functions, such as LoadCursor () and SetCursor () available within Microsoft Windows operating system, available from Microsoft Corporation having a business address of One Microsoft Way, Redmond, Washington 98052.

As shown in Figure 4, special paper clip shaped cursor 44 is used to select a location within document 15. For example, the location is selected by placing special paper clip shaped cursor 44 over the location within document 15 and depressing a key on mouse 14.

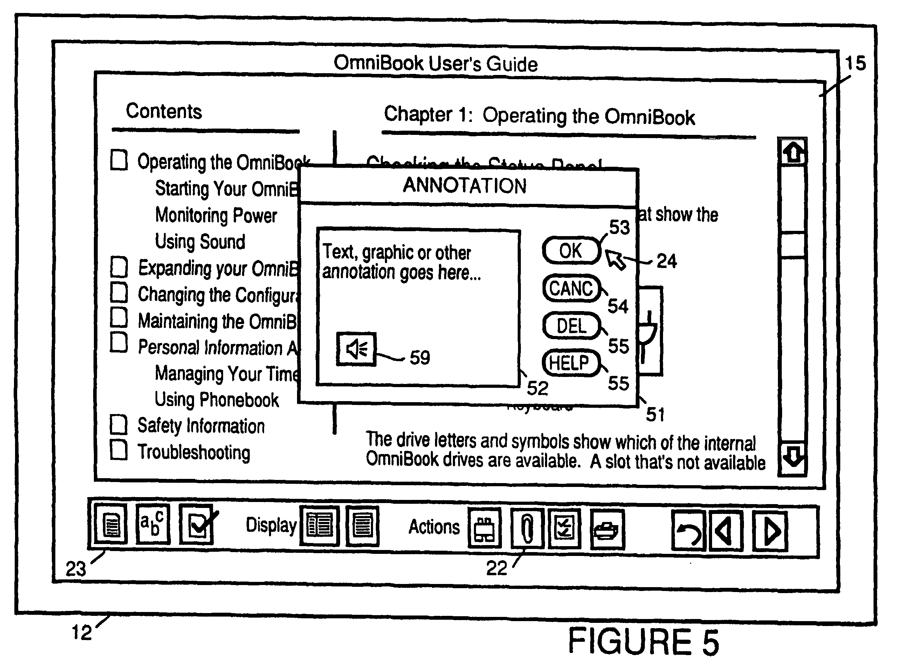

Upon selection of the location within document 15, an annotation box is shown. For example, as shown in Figure 5, annotation text is contained within an annotate dialog box 51. Annotate dialog box 51 includes, for example, an annotate text section 52. Using keyboard 13 or some other input method, such as speech recognition, etc., a user may input an annotation into annotate text section 52. Annotate dialog box 51 may be closed, for example, by using cursor 24 to select an "OK" button 53. Selection of a delete button 54 deletes annotation dialog box 51. Selection of a cancel button 55 closes annotate dialog box 51 and cancels the action taken which resulted in annotation dialog box 51 being displayed.

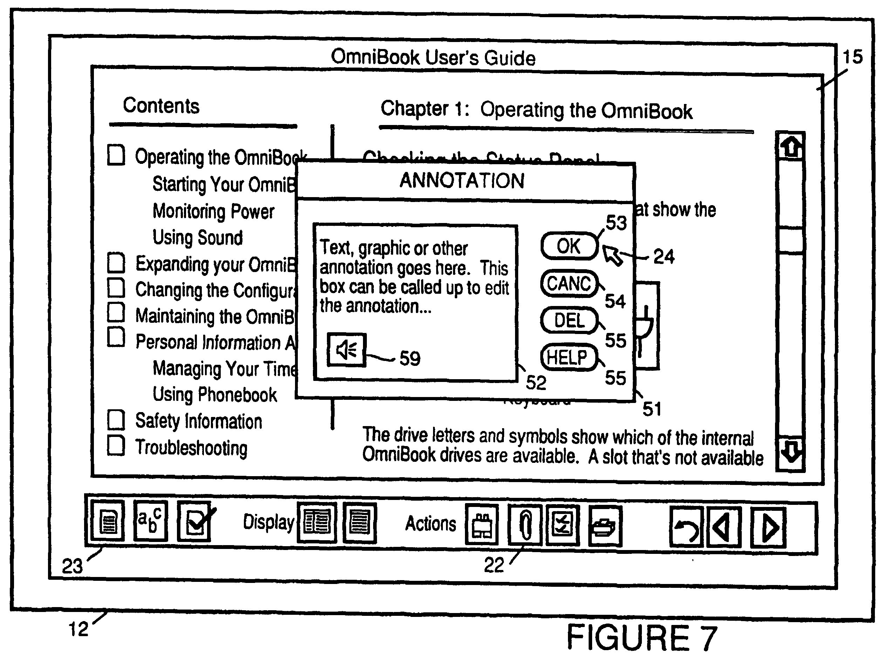

In the preferred embodiment, objects are attached to dialog box 51 using a "drag-and-drop" operation. Alternately, an additional "Attach button" is added to annotate dialog box 51. Objects attached to the annotate text section 52 appear as an icon. For example, in Figure 7, sound icon 59 appears in annotate text section 52. Double-clicking on sound icon 59 results in a recorded message being played back. The attaching of objects to annotate text section 52 is implemented using standard library functions available within the Microsoft Windows operating system. For example, these library functions include Windows Object Linking and Embedding (OLE) functions.

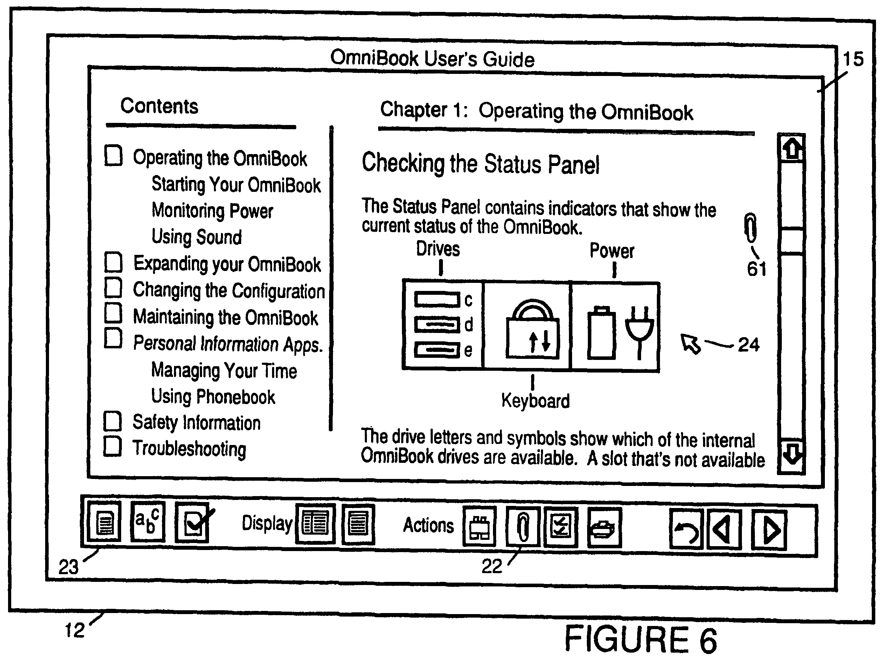

Once "OK" button 53 has been selected and annotate dialog box 51 has been closed, the selected location is marked, for example by displaying a special icon 61 in the vicinity of the selected location, as shown in Figure 6. For example, as shown in Figure 6, special icon 61 is placed in the margin of document 15 near the selected location. Alternatively, special icon 61 may be inserted directly into the selected location, moving adjacent text apart to fit in special icon 61. Another alternative is to place special icon 61 elsewhere on computer display 12, such as at the top of document 15. In this case special icon 61 is associated with the selected location, for example, by a label next to special icon 61 or by a pop-up label that appears when cursor 24 is placed over special icon 61.

In the preferred embodiment, standard library functions available within the Microsoft Windows operating system are used both to display document 15 and special icon 61. For example, to display document 15, DrawText () and TextOut () can be used. To display special icon 61, CreateWindow () can be used to create an owner drawn button and DrawIcon () or BitBlt () can be used to draw the icon onto the button. Alternatively, DrawIcon () or BitBlt () can be used to draw a symbol and then mouse button messages, such as WM_LBUTTONDBCLCLK, are monitored.

The standard library functions space can be used to create space as needed for special icon 61, display special icon 61 as part of document 15 and detect mouse selections of special icon 61. The same standard library functions are used to display annotate dialog box 51.

In an alternative embodiment, special icon 61 is displayed by creating a small annotation window for special icon 61 and displaying the special annotation window on top of the display for display document 15. The display of special icon 61 is then synchronized using custom functionality placed within the operating system.

In another alternative embodiment, special icon 61 is displayed using a separate annotation program that operates separately from the interface for document 15. The separate annotation program creates a special annotation window for special icon 61 and displays the special annotation window on top of the display for display document 15. The display of special icon 61 is synchronized using dynamic data exchange (DDE) available within the Microsoft Windows operating system.

Upon special icon 61 being selected, dialog box 51 reappears, as shown in Figure 7. Special icon 61 may be selected, for example, by positioning cursor 24 over special icon 61 and "double-clicking" a key on mouse 14. Once annotation dialog box 51 is displayed, the user may then read the annotation, modify the annotation, delete the annotation, and so on.

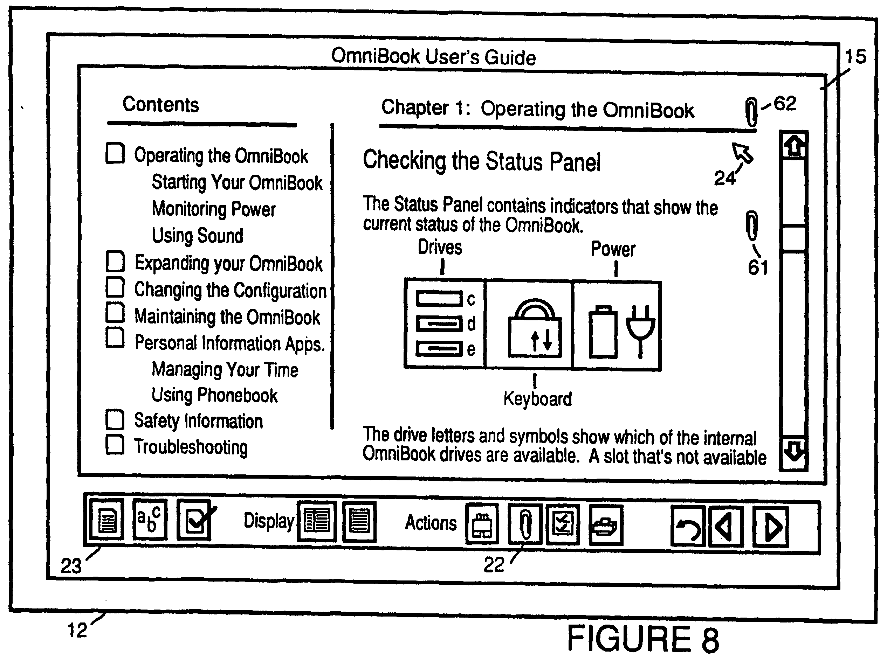

Multiple annotations may be added to document 15. For each annotation, a new marking is added. For example, Figure 8 shows, in addition to special icon 61, an additional special icon 62. The annotation represented by special icon 62 may have been added to document 15, for example, by performing the steps set out in Figure 2 and illustrated by Figures 3 through 6. Alternately, the annotation represented by special icon may have been added in another way, for example by duplicating an existing annotation.

In the preferred embodiment, copy, cut and paste features are implemented for text, graphics and other annotations within annotate text section 52, using standard library functions available within the Microsoft Windows operating system. For text, SendMessage () can be used to send WM_COPY, WM_CUT, and WM_PASTE messages. For graphics, frequently used functions include OpenClipboard (), CreateBitmap (), SetClipboardData (), GetClipboard Data (), GetBitmapBits (), GetObject (), CloseClipboard (), and BitBlt ().

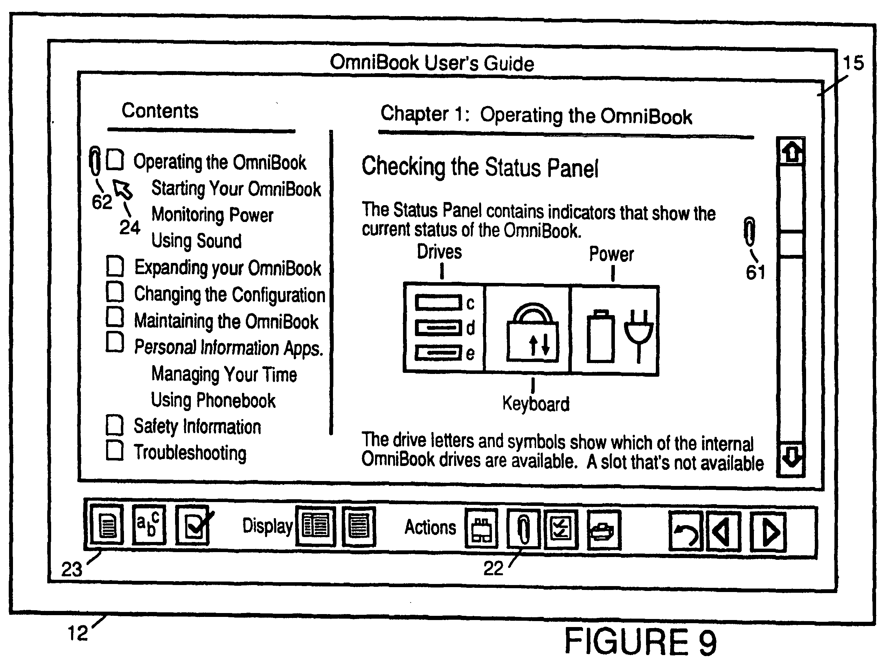

The location of each annotation may be moved. This is illustrated by Figure 9, which shows the location of the annotation represented by special icon 62 having been moved to a new location in document 15. The movement has taken place, for example, by "dragging and dropping" special icon 62 to the new location. In a drag and drop operation, cursor 24 is positioned over special icon 62. A button on mouse 14 is then depressed and held depressed while cursor 24 is positioned over a new location. Upon release of the button on mouse 14, the annotation is moved to the new location and special icon 62 is displayed in close vicinity to the new location, for example in the margin of document 15 at a position adjacent to the new location. Annotations may be moved by other means, for example, by cutting or copying the annotation and pasting the annotation to a new location.

In the preferred embodiment, copy, cut, paste and drag-and-drop features are implemented for annotations, using standard library functions available within the Microsoft Windows operating system. Functions for copy, cut and paste features are listed above. For drag-and-drop operations, the additional functions include DragAcceptFiles (), DragQueryFile (), DragQueryPoint (), and DragFinish ().

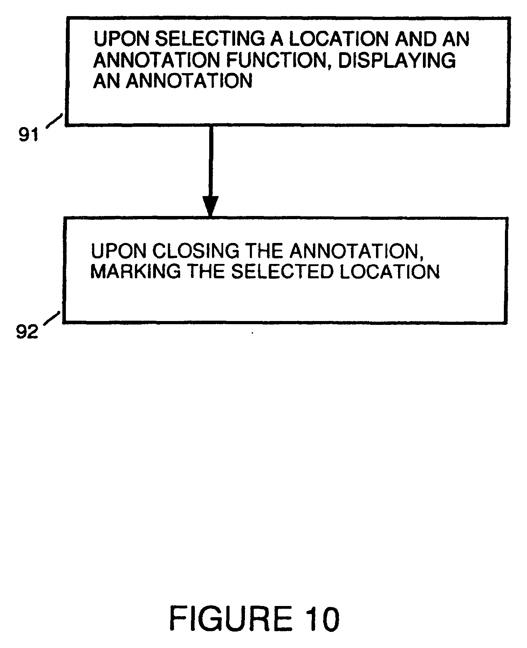

Figure 10 is a flowchart which describes operation of an interface for annotating document 15 in accordance with an alternate preferred embodiment of the present invention. In a step 91, upon selection by a user of a location in document 15 and the annotation feature, an annotation box is displayed. For example, the location is selected by placing the cursor over the location and depressing or releasing a key on an input device such as a mouse, trackball, trackpad or keyboard. The annotation feature is selected, for example, by selecting a special "annotation" button. Alternately, the selection of the annotation may be made, for example, by selecting an "annotation" listing on a pull-down menu, by depressing a particular function key on a keyboard, by depressing a particular sequence of keys on a keyboard, or by some other means. The text for the annotation is displayed, for example, within an annotation dialog box. Initially, a displayed annotation box does not have any user-defined text The user may add the desired text for the annotation, for example using a keyboard or another input device.

In a step 92, upon closing the annotation box, the selected location is marked, for example by displaying a special icon in the vicinity of the selected location. For example, the special icon is placed in the margin of document 15 near the selected location. Upon a user selecting the annotation, the associated annotation dialog box is displayed. For example, the annotation is selected by selecting the special icon. Once the annotation has been selected, the user may then read the annotation, modify the annotation, delete the annotation, and so on. Additionally, the user may move the location of the annotation, as described above.

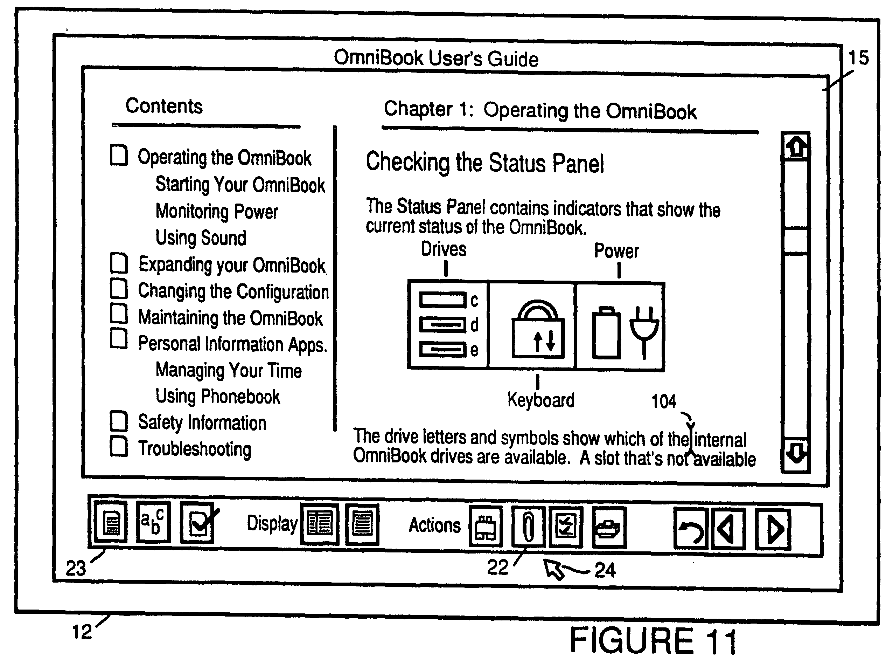

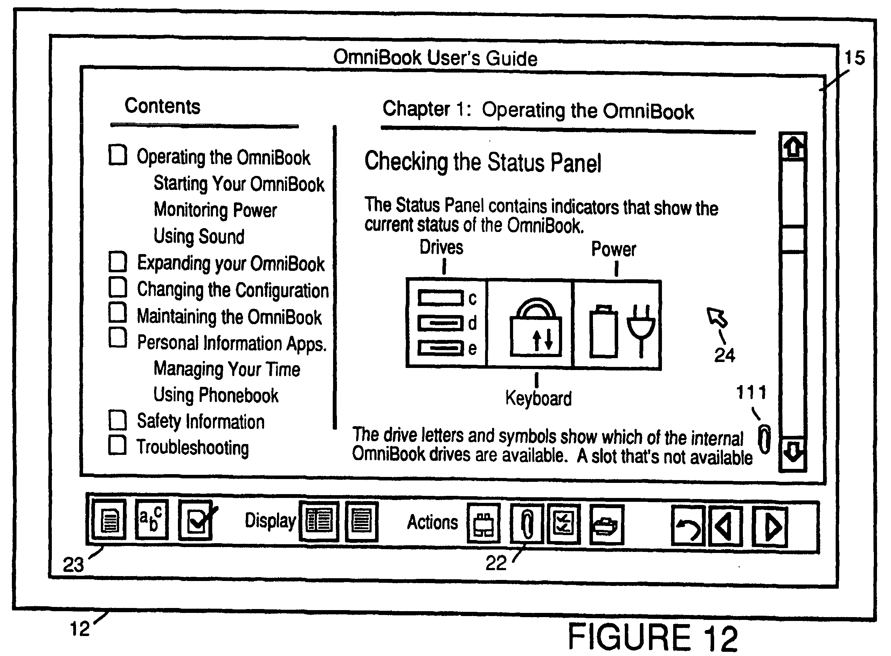

Figures 11 and 12 show various screens of computer display 12 which illustrate interaction with document 15 in order to place annotations in accordance with the alternate preferred embodiment of the present invention. The computer screen shown in Figure 10 includes document 15, various interface buttons on tool bar 23 including annotate button 22, as described above.

As shown in Figure 11, cursor 24 is used to select a location within document 15. For example, the location is selected by placing cursor 24 over the location within document 15 and depressing a key on mouse 14. A marker 104, is placed in document 15 as shown. After selecting the location, cursor 24 is used to select annotate button 24. Alternately, another action may be taken to select the annotation feature. For example, a user may select an "annotation" listing on a pull-down menu, depressing a particular function key on a keyboard, depressing a particular sequence of keys on a keyboard, or some other pre-defined action.

Upon selection of the annotation feature within document 15, an annotation box is shown. For example, text for the annotation is contained within an annotate dialog box, as discussed above. Once a user has input the desired text for the annotation, annotate dialog box is closed. The selected location is then marked, for example by displaying a special icon 111 in the vicinity of the selected location, as shown in Figure 12. For example, as shown in Figure 12, the special icon is placed in the margin by the selected location.

In the preferred embodiment, standard library functions available within the Microsoft Windows operating system are used to display marker 104 and later special icon 111. For example, these functions include DrawIcon() and BitBlt (). Position of the marker is maintained, for example, by the application program controlling document 15.

The foregoing discussion discloses and describes merely exemplary methods and embodiments of the present invention. As will be understood by those familiar with the art, the invention may be embodied in other specific forms without departing from the spirit or essential characteristics thereof. Accordingly, the disclosure of the present invention is intended to be illustrative, but not limiting, of the scope of the invention, which is set forth in the following claims.

## Claims

1. A computer implemented method for annotating a displayed document (15) comprising the steps of:
(a) upon selection of an annotation feature and a location in the document (15), displaying an annotation box (51), the annotation box being for receipt and storage of text, wherein the annotation box displays stored text when open but hides stored text when closed; and,
(b) upon closing the annotation box (51), no longer displaying the annotation box and no longer displaying stored text, but continuing to store text and marking the location in the document (15).

2. A computer implemented method as in claim 1 wherein step (a) includes the following substeps:
(a.1) upon selection of the annotation feature, indicating the annotation feature; and,
(a.2) upon selecting the location in the document (15), displaying the annotation box (51).

3. A computer implemented method as in claim 2 wherein substep (a.1) includes changing a shape of a cursor (24,44).

4. A computer implemented method as in claim 1 wherein in step (b) the location is marked by displaying a special icon (61,62) in a location in a vicinity of the location in the document (15).

5. A computer implemented method as in claim 4 additionally comprising the following step:
(c) upon selection of the special icon (61,62), displaying the annotation box (51).

6. A computer implemented method as in claim 4 additionally comprising the following step:
(c) in response to a user, moving the special icon (61,62) to a new location within the document (15).

7. A computer implemented method as in claim 1 wherein step (a) includes the following substeps:
(a.1) upon selecting the location in the document (15), showing a marker (104) in the document (15) at the selected location; and,
(a.2) upon selection of the annotation feature, displaying the annotation box (51).

8. A computer implemented method as in claim 1 additionally comprising the following step performed after step (a):
in response to a user selection, attaching graphic information to the annotation box (51).

9. A computer implemented method as in claim 1 additionally comprising the following step performed after step (a):
in response to a user selection, attaching a sound file to the annotation box (51).

10. A computer implemented method as in claim 1 additionally comprising the following step performed after step (a):
in response to a user selection, attaching a movie file to the annotation box (51).

## Patentansprüche

1. Ein computerimplementiertes Verfahren zum Kommentieren eines angezeigten Dokuments (15), das folgende Schritte aufweist:
(a) auf eine Auswahl eines Kommentarmerkmals und einer Position in dem Dokument (15) hin, Anzeigen einer Kommentarbox (51), wobei die Kommentarbox zu einem Empfangen und einer Speicherung von Text ist, wobei die Kommentarbox einen gespeicherten Text anzeigt, wenn dieselbe offen ist, aber einen gespeicherten Text verbirgt, wenn dieselbe geschlossen ist; und
(b) auf ein Schließen der Kommentarbox (51) hin, nicht mehr Anzeigen der Kommentarbox und nicht mehr Anzeigen eines gespeicherten Textes, aber Fortfahren, einen Text zu speichern und die Position in dem Dokument (15) zu markieren.

2. Ein computerimplementiertes Verfahren gemäß Anspruch 1, bei dem der Schritt (a) die folgenden Teilschritte umfaßt:
(a.1) auf eine Auswahl des Kommentarmerkmals hin, Angeben des Kommentarmerkmals; und
(a.2) auf ein Auswählen der Position in dem Dokument (15) hin, Anzeigen der Kommentarbox (51).

3. Ein computerimplementiertes Verfahren gemäß Anspruch 2, bei dem der Teilschritt (a.1) ein Ändern einer Form eines Cursors (24, 44) umfaßt.

4. Ein computerimplementiertes Verfahren gemäß Anspruch 1, bei dem in dem Schritt (b) die Position durch ein Anzeigen eines speziellen Icons (61, 62) bei einer Position in einer Nähe der Position in dem Dokument (15) markiert wird.

5. Ein computerimplementiertes Verfahren gemäß Anspruch 4, das zusätzlich den folgenden Schritt aufweist:
(c) auf eine Auswahl des speziellen Icons (61, 62) hin, Anzeigen der Kommentarbox (51).

6. Ein computerimplementiertes Verfahren gemäß Anspruch 4, das zusätzlich den folgenden Schritt aufweist:
(c) ansprechend auf einen Benutzer, Bewegen des speziellen Icons (61, 62) zu einer neuen Position innerhalb des Dokuments (15).

7. Ein computerimplementiertes Verfahren gemäß Anspruch 1, bei dem der Schritt (a) die folgenden Teilschritte umfaßt:
(a.1) auf ein Auswählen der Position in dem Dokument (15) hin, Zeigen eines Markierers (104) in dem Dokument (15) an der ausgewählten Position; und
(a.2) auf eine Auswahl des Kommentarmerkmals hin, Anzeigen der Kommentarbox (51).

8. Ein computerimplementiertes Verfahren gemäß Anspruch 1, das zusätzlich den folgenden Schritt aufweist, der nach dem Schritt (a) durchgeführt wird:
ansprechend auf eine Benutzerauswahl, Anbringen von Graphikinformationen an der Kommentarbox (51).

9. Ein computerimplementiertes Verfahren gemäß Anspruch 1, das zusätzlich den folgenden Schritt aufweist, der nach dem Schritt (a) durchgeführt wird:
ansprechend auf eine Benutzerauswahl, Anbringen einer Tondatei an der Kommentarbox (51).

10. Ein computerimplementiertes Verfahren gemäß Anspruch 1, das zusätzlich den folgenden Schritt aufweist, der nach dem Schritt (a) durchgeführt wird:
ansprechend auf eine Benutzerauswahl, Anbringen einer Bewegtbilddatei an der Kommentarbox (51).

## Revendications

1. Procédé informatique pour annoter un document affiché (15), comprenant les étapes consistant à :
(a) lors de la sélection d'un élément d'annotation et d'un emplacement dans le document (15), afficher une boîte d'annotation (51), la boîte d'annotation étant destinée à la réception et à la mémorisation d'un texte, dans lequel la boîte d'annotation affiche le texte mémorisé lorsqu'elle est ouverte, mais cache le texte mémorisé lorsqu'elle est fermée ; et,
(b) lors de la fermeture de la boîte d'annotation (51), ne plus afficher la boîte d'annotation et ne plus afficher le texte mémorisé, mais continuer à mémoriser le texte et marquer l'emplacement dans le document (15).

2. Procédé informatique selon la revendication 1, dans lequel l'étape (a) comprend les étapes secondaires suivantes consistant à :
(a.1) lors de la sélection de l'élément d'annotation, indiquer l'élément d'annotation ; et,
(a.2) lors de la sélection de l'emplacement dans le document (15), afficher la boîte d'annotation (51).

3. Procédé informatique selon la revendication 2, dans lequel l'étape secondaire (a.1) comporte le changement de la forme d'un curseur (24, 44).

4. Procédé informatique selon la revendication 1, dans lequel à l'étape (b), l'emplacement est marqué en affichant une icône spéciale (61, 62) à un emplacement au voisinage de l'emplacement dans le document (15).

5. Procédé informatique selon la revendication 4, comprenant, de plus, l'étape suivante consistant à :
(c) lors de la sélection de l'icône spéciale (61, 62), afficher la boîte d'annotation (51).

6. Procédé informatique selon la revendication 4, comprenant, de plus, l'étape suivante consistant à :
(c) en réponse à un utilisateur, déplacer l'icône spéciale (61, 62) à un nouvel emplacement à l'intérieur du document (15).

7. Procédé informatique selon la revendication 1, dans lequel l'étape (a) comporte les étapes secondaires suivantes consistant à :
(a.1) lors de la sélection de l'emplacement dans le document (15), présenter un marqueur (104) dans le document (15) à l'emplacement sélectionné ; et,
(a.2) lors de la sélection de l'élément d'annotation, afficher la boîte d'annotation (51).

8. Procédé informatique selon la revendication 1, comprenant, de plus, l'étape suivante, exécutée après l'étape (a), consistant à :
en réponse à un choix de l'utilisateur, attacher des informations graphiques à la boîte d'annotation (51).

9. Procédé informatique selon la revendication 1, comprenant, de plus, l'étape suivante, exécutée après l'étape (a), consistant à :
en réponse à un choix de l'utilisateur, attacher un fichier de son à la boîte d'annotation (51).

10. Procédé informatique selon la revendication 1, comprenant, de plus, l'étape suivante, exécutée après l'étape (a), consistant à :
en réponse à un choix de l'utilisateur, attacher un fichier de film à la boîte d'annotation (51).
